(19) **Europäisches Patentamt / European Patent Office / Office européen des brevets**

(11) **EP 1 959 516 A1**

(12) **EUROPEAN PATENT APPLICATION**

(43) Date of publication:
  **20.08.2008 Bulletin 2008/34**

(51) Int Cl.:
  *H01M 8/06* (2006.01)

(21) Application number: **08250411.9**

(22) Date of filing: **04.02.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (72) Inventors:<br> • **Gil, Jae-Hyoung**<br>  **Seoul 138-839 (KR)**<br> • **Jang, Jae-Hyuk**<br>  **Seongnam-si**<br>  **Gyeonggi-do 463-787 (KR)** |
| (30) Priority: **14.02.2007 KR 20070015552**<br>    **23.08.2007 KR 20070085138** | (74) Representative: **Lamb, Martin John Carstairs**<br>**Marks & Clerk**<br>**90 Long Acre**<br>**London WC2E 9RA (GB)** |
| (71) Applicant: **Samsung Electro-Mechanics Co., Ltd**<br>**Suwon**<br>**Gyunggi-do 443-743 (KR)** | |

(54) **Hydrogen generating apparatus and fuel cell power generation system**

(57)   A hydrogen generating apparatus (200) includes an electrolyzer (210), which is filled with an aqueous electrolyte solution (215), a first electrode (220), which is accommodated in the electrolyzer (210), submerged in the aqueous electrolyte solution (215), and generates electrons, a second electrode (230), which is accommodated in the electrolyzer (210), submerged in the aqueous electrolyte solution (215), receives the electrons to generate hydrogen, and a controller (240), which is located between the first electrode (220) and the second electrode (230) and controls an amount of electrons flowing from the first electrode (220) to the second electrode (230) for a period of time.

The present invention differs from the conventional method of generating hydrogen by a certain quantity, in that the quantity of generated hydrogen can be controlled by controlling the amount of current flowing between electrodes according to a user or a fuel cell.

FIG. 2

$$Mg \rightarrow Mg^{2+} + 2e^-$$
$$H_2O + e^- \rightarrow \tfrac{1}{2}H_2 + (OH)^-$$

**Description**

**CROSS-REFERENCE TO RELATED APPLICATIONS**

This application claims the benefit of Korean Patent Application No. 2007-0015552 filed with the Korean Intellectual Property Office on Feb. 14, 2007, and of Korean Patent Application No. 2007-0085138 filed on Aug. 23, 2007, the disclosures of which are incorporated herein by reference in their entirety.

**BACKGROUND OF THE INVENTION**

Field of the Invention

The present invention relates to a hydrogen generating apparatus, more particularly to a hydrogen generating apparatus that can control the amount of generation of hydrogen supplied to a fuel cell.

Background Art

A fuel cell refers to an energy conversion apparatus that directly converts chemical energy of a fuel (hydrogen, LNG, LPG, methanol, etc.) and air to electricity and/or heat by means of an electrochemical reaction. Unlike a conventional power generation technology that requires fuel combustion, steam generation, or a turbine or power generator, the fuel cell technology needs no combustion process or driving device, thereby boosting energy efficiency and curbing environmental problems.

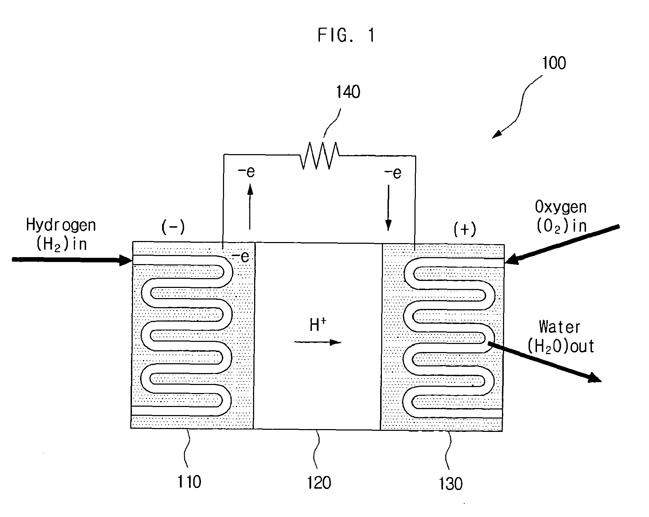

FIG. 1 illustrates an operational architecture of a fuel cell.

Referring to FIG 1, a fuel cell 100 is composed of an anode as a fuel pole 110 and a cathode as an air pole 130. The fuel pole 110 is provided with hydrogen molecules ($H_2$), and decomposes them into hydrogen ions ($H^+$) and electrons ($e^-$). The hydrogen ion ($H^+$) moves toward the air pole 130 via a membrane 120, which is an electrolyte layer. The electron moves through an external circuit 140 to generate an electric current. In the air pole 130, the hydrogen ions and the electrons are combined with oxygen molecules in the atmosphere, generating water molecules. The following chemical formulas represent the above chemical reactions occurring in the fuel cell 100.

CHEMICAL FORMULA 1         Fuel pole 110: $H2 \rightarrow 2H^+ + 2e^-$

Air pole 130: $1/2\ O_2 + 2H^+ + 2e^- \rightarrow H_2O$

Overall reaction: $H_2 + 1/2\ O_2 \rightarrow H_2O$

In short, the fuel cell 100 functions as a battery by supplying the electric current, generated due to the flowing of the decomposed electrons, to the external circuit 140. Such a fuel cell 100 hardly emits an atmospheric pollutant such as Sox and NOx and makes little noise and vibration.

Meanwhile, in order to produce electrons in the fuel pole 110, the fuel cell 100 necessitates a hydrogen generating apparatus that can change a common fuel to hydrogen gas.

A hydrogen storage tank, generally known as a hydrogen generating apparatus, however, occupies a large space and should be kept with care.

Moreover, as a portable electronic device, such as a mobile phone and a notebook computer, requires a large capacity of power, it is necessary that the fuel cell have a large capacity and perform high performance while it is small.

In order to meet the above needs, methanol or formic acid, permitted to be brought into an airplane by International Civil Aviation Organization (ICAO), is used for fuel reforming, or methanol, ethanol, or formic acid is directly used as a fuel for the fuel cell.

However, the former case requires a high reforming temperature, has a complicated system, consumes driving power, and contains impurities (e.g., $CO_2$ and CO) in addition to pure hydrogen. The latter case deteriorates power density due to a low rate of a chemical reaction in the anode and a cross-over of hydrocarbon through the membrane.

**SUMMARY OF THE INVENTION**

The present invention provides a hydrogen generating apparatus that can generate pure hydrogen at room temperature through an electrochemical reaction.

The present invention also provides a hydrogen generating apparatus that can control the quantity of hydrogen generation without a separate BOP (Balance of Plant) unit while maintaining a simple structure.

The present invention also provides a hydrogen generating apparatus that are economical and eco-friendly.

An aspect of the present invention features a hydrogen generating apparatus that is capable of controlling the amount of hydrogen generation.

The hydrogen generating apparatus in accordance with an embodiment of the present invention includes an electrolyzer, which is filled with an aqueous electrolyte solution, a first electrode, which is accommodated in the electrolyzer, submerged in the aqueous electrolyte solution, and generates electrons, a second electrode, which is accommodated in the electrolyzer, submerged in the aqueous electrolyte solution, receives the electrons to generate hydrogen, and a controller, which is located between the first electrode and the second electrode, and controls an amount of electrons flowing from the first electrode to the second electrode for a period of time.

The metal forming the first electrode may have a higher ionization tendency than a metal forming the second electrode.

The hydrogen generating apparatus may further comprise a flow rate meter, measuring an amount of hydrogen generated from the second electrode, in which the controller receives a set value, compares the amount of hydrogen generation with the set value, and controls the amount of electrons. The controller may be inputted with the set value directly from a user through an input unit or a fuel cell being coupled to the hydrogen generating apparatus.

The controller may compare the set value with the amount of hydrogen generation, increase the amount of electrons if the amount of hydrogen generation is smaller than the set value, reduce the amount of electrons if the amount of hydrogen generation is greater than the set value, and maintain the amount of electrons if the amount of hydrogen generation is equal to the set value.

The set value has an upper limit and a lower limit, and the controller may compare the set value with the amount of hydrogen generation, increase the amount of electrons if the amount of hydrogen generation is smaller than the lower set value, reduce the amount of electrons if the amount of hydrogen generation is greater than the upper set value, and maintain the amount of electrons if the amount of hydrogen generation is within a range between the upper set value and the lower set value.

Another aspect of the present invention features a fuel cell power generation system having a hydrogen generating apparatus that is capable of controlling the amount of hydrogen generation.

The fuel cell power generation system includes a hydrogen generating apparatus, which controls an amount of hydrogen generation by controlling an amount of electrons flowing between electrodes for a period of time, a fuel cell, which is supplied with hydrogen generated by the hydrogen generating apparatus and converting chemical energy of the hydrogen to electrical energy, and a load, which is provided the electric energy and performing a predetermined operation.

The hydrogen generating apparatus includes an electrolyzer, which is filled with an aqueous electrolyte solution, a first electrode, which is accommodated in the electrolyzer, submerged in the aqueous electrolyte solution, and generates electrons, a second electrode, which is accommodated in the electrolyzer, submerged in the aqueous electrolyte solution, receives the electrons to generate hydrogen, and a controller, which receives a demanded power from the load, measuring an output of the fuel cell, compares the demanded power with the output, and controls the amount of electrons flowing from the first electrode to the second electrode for a period of time.

The controller may compare the demanded power with the output, and reduce the amount of electrons if the output is greater than the demanded power, increase the amount of electrons if the output is smaller than the demanded power, and maintain the amount of electrons if output is equal to the demanded power.

The fuel cell power generating system in another embodiment may further include a rechargeable battery, which is coupled between the fuel cell and the load, charged by the electric energy from the fuel cell, and provides the charged electric energy when the load needs.

The hydrogen generating apparatus may include an electrolyzer, which is filled with an aqueous electrolyte solution, a first electrode, which is accommodated in the electrolyzer, submerged in the aqueous electrolyte solution, and generates electrons, a second electrode, which is accommodated in the electrolyzer, submerged in the aqueous electrolyte solution, receives the electrons to generate hydrogen, a controller, which measures a present voltage of the rechargeable battery, compares a fully-charged voltage with the present voltage, and controls the amount of electron flowing from the first electrode to the second electrode for a period of time. The metal forming the first electrode has a higher ionization tendency than a metal forming the second electrode.

The controller may compare the present voltage with the fully-charged voltage, and increase the amount of electrons if the present voltage is smaller than the fully-charged voltage, and minimize the amount of electrons if the present voltage is equal to or greater than the fully-charged voltage.

**BRIEF DESCRIPTION OF THE DRAWINGS**

These and other features, aspects and advantages of the present invention will become better understood with regard to the following description, appended claims and accompanying drawings where:

FIG. 1 illustrates an operational architecture of a fuel cell;

FIG. 2 shows a sectional view of a hydrogen generating apparatus in accordance with an embodiment of the present invention;

FIG. 3 is a graph showing the power consumption of mobile phone;

FIG. 4 is a graph showing how the amount of electric current flowing between the first electrode and the second electrode is related to the volume of hydrogen generated on the second electrode;

FIG. 5 shows a block diagram of the control unit of the hydrogen generating apparatus in accordance with an embodiment of the present invention;

FIG. 6 shows a fuel cell power generation system comprising controller of hydrogen generating apparatus, fuel cell coupled thereto, and a load in accordance with another embodiment of the present invention; and

FIG. 7 shows a fuel cell power generation system comprising controller of hydrogen generating apparatus, fuel cell coupled thereto, and a load in accordance with still another embodiment of the present invention.

## DESCRIPTION OF THE EMBODIMENTS

Since there can be a variety of permutations and embodiments of the present invention, certain embodiments will be illustrated and described with reference to the accompanying drawings. This, however, is by no means to restrict the present invention to certain embodiments, and shall be construed as including all permutations, equivalents and substitutes covered by the spirit and scope of the present invention. Throughout the drawings, similar elements are given similar reference numerals. Throughout the description of the present invention, when describing a certain technology is determined to evade the point of the present invention, the pertinent detailed description will be omitted.

Terms such as "first" and "second" can be used in describing various elements, but the above elements shall not be restricted to the above terms. The above terms are used only to distinguish one element from the other. For instance, the first element can be named the second element, and vice versa, without departing the scope of claims of the present invention. The term "and/or" shall include the combination of a plurality of listed items or any of the plurality of listed items.

When one element is described as being "connected" or "accessed" to another element, it shall be construed as being connected or accessed to the other element directly but also as possibly having another element in between. On the other hand, if one element is described as being "directly connected" or "directly accessed" to another element, it shall be construed that there is no other element in between.

The terms used in the description are intended to describe certain embodiments only, and shall by no means restrict the present invention. Unless clearly used otherwise, expressions in the singular number include a plural meaning. In the present description, an expression such as "comprising" or "consisting of" is intended to designate a characteristic, a number, a step, an operation, an element, a part or combinations thereof, and shall not be construed to preclude any presence or possibility of one or more other characteristics, numbers, steps, operations, elements, parts or combinations thereof.

Unless otherwise defined, all terms, including technical terms and scientific terms, used herein have the same meaning as how they are generally understood by those of ordinary skill in the art to which the invention pertains. Any term that is defined in a general dictionary shall be construed to have the same meaning in the context of the relevant art, and, unless otherwise defined explicitly, shall not be interpreted to have an idealistic or excessively formalistic meaning.

Hereinafter, certain embodiments will be described in detail with reference to the accompanying drawings. Identical or corresponding elements will be given the same reference numerals, regardless of the figure number, and any redundant description of the identical or corresponding elements will not be repeated.

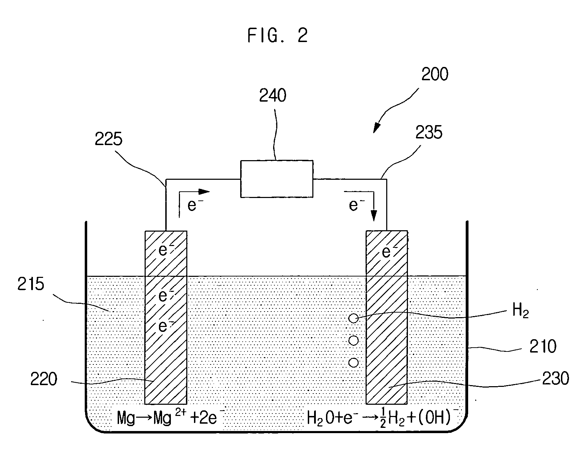

FIG. 2 is a sectional view of a hydrogen generating apparatus in accordance with an embodiment of the present invention.

A hydrogen generating apparatus 200 includes an electrolyzer 210, a first electrode 220, a second electrode 230 and a control unit 240. For the convenience of description and understanding, it will be presumed below that the first electrode 220 is composed of magnesium (Mg) and the second electrode 230 is composed of stainless steel.

The electrolyzer 210 is filled with an aqueous electrolyte solution 215. The aqueous electrolyte solution 215 contains hydrogen ions, which are used by the hydrogen generating apparatus 200 to generate hydrogen gas.

Examples of the electrolyte for the aqueous electrolyte solution 215 are LiCl, KCl, NaCl, $KNO_3$, $NaNO_3$, $CaCl_2$, $MgCl_2$, $K_2SO_4$, $Na_2SO_4$, $MgSO_4$, AgCl, or the like.

The electrolyzer 210 accommodates the first electrode 220 and the second electrode 230, the entirety or portions of which are submerged in the electrolyte solution 215.

The first electrode 220 is an active electrode, where the magnesium (Mg) is oxidized to magnesium ions ($Mg^{2+}$), releasing electrons due to the difference in ionization energies of magnesium and water. The released electrons move to the second electrode 230 through a first electric wire 225, the control unit 240 and a second electric wire 235.

The second electrode 230 is an inactive electrode, where the water molecules receive the electrons moved from the first electrode 220 and then are decomposed into the hydrogen molecules.

The above chemical reactions can be represented as the following chemical formula 2:

CHEMICAL FORMULA 2  First electrode 200: $Mg \rightarrow Mg^{2+} + 2e^-$

Second electrode 230: $2H_2O + 2e^- \rightarrow H_2 + 2(OH)^-$

Overall reaction: $Mg + 2H_2O \rightarrow Mg(OH)_2 + H_2$

The reaction rate and the efficiency of the chemical reaction depend on various factors, including the area of the first electrode 220 and/or the second electrode 230, the concentration of the aqueous electrolyte solution 215, the type of the aqueous electrolyte solution 215, the number of the first electrode 220 and/or the second electrode 230, the method of connecting the first electrode 220 and the second electrode 230, the electric resistance between the first electrode 220 and the second electrode 230.

Changing any of the above factors affects the amount of electric current (that is, the amount of electrons) flowing between the first electrode 220 and the second electrode 230, thereby altering the reaction rate of the electrochemical reaction shown in CHEMICAL FORMULA 2, which in turn changes the amount of hydrogen generated in the second electrode 230.

Therefore, the amount of the hydrogen generated in the second electrode 230 can be controlled by controlling the amount of the electric current that flows between the first electrode 220 and the second electrode 230. Faraday's law explains this as shown in MATHEMATICAL FORMULA 1 below.

## MATHEMATICAL FORMULA 1

$$N_{hydrogen} = \frac{i}{nE}$$

$$N_{hydrogen} = \frac{i}{2 \times 96485}\,(mol)$$

$$V_{hydrogen} = \frac{i}{2 \times 96485} \times 60 \times 22400\,(ml/min)$$

$$= 7 \times i\,(ml/min)$$

Where $N_{hydrogen}$ is the amount of hydrogen generated per second (mol/s), $V_{hydrogen}$ is the volume of hydrogen generated per minute (ml/min), $i$ is the electric current (C/s), $n$ is the number of the reacting electrons, and E is the electron charge per mole (C/mol).

In the case of the above CHEMICAL FORMULA 2, $n$ has a value of 2 since two electrons react at the second electrode 230, and $E$ has a value of -96,485 C/mol.

The volume of hydrogen generated per minute can be calculated by multiplying the time (60 seconds) and the molar volume of hydrogen (22400ml) to the amount of hydrogen generated per second.

For example, in the case that the fuel cell is used in a 2W system, and it is assumed that the fuel cell is running a voltage of 0.6V at room temperature and that a hydrogen usage ratio is 60%, it takes 42ml/mol of hydrogen and 6A of electric current. In the case that the fuel cell is used in a 5W system, it takes 105ml/mol of hydrogen and 15A of electric current.

The hydrogen generating apparatus 200 can meet the variable hydrogen demand of the fuel cell connected thereto by controlling the amount of electric current flowing through the first electric wire 225, connected to the first electrode 220, and the second electric wire 235, connected to the second electrode 230.

However, most of the factors that determine the rate of the hydrogen generation reaction occurring in the second electrode of the hydrogen generating apparatus 200, except the electric resistance between the first electrode 220 and the second electrode 230, are hardly changeable once the hydrogen generating apparatus 200 is manufactured.

Therefore, the hydrogen generating apparatus 200 according to this embodiment of the present invention has the control unit 240 disposed between the first electric wire 225 and the second electric wire 235, which connect the first electrode 220 and the second electrode 230, in order to regulate the electric resistance between the first electrode 220 and the second electrode 230.

Thus, the hydrogen generating apparatus 200 controls the electric resistance between the first electrode 220 and the second electrode 230, that is, the amount of the electric current flowing therebetween, thereby generating as much hydrogen as needed by the fuel cell.

The first electrode 220 can be also composed of a metal having a relatively high ionization tendency, such as iron (Fe), aluminum (Al), zinc (Zn), or the like. The second electrode 230 can be also composed of a metal having a relatively low ionization tendency compared to the metal of the first electrode 220, such as platinum (Pt), aluminum (Al), copper (Cu), gold (Au), silver (Ag), iron (Fe), or the like.

The control unit 240 controls a transfer rate, that is, the amount of electric current, at which electrons generated in the first electrode 220 are transferred to the second electrode 230.

The control unit 240 receives information on power demanded for load coupled to the fuel cell and, according to the information, maintains, or increases or reduces the amount of electrons flowing from the first electrode 220 to the second electrode 230.

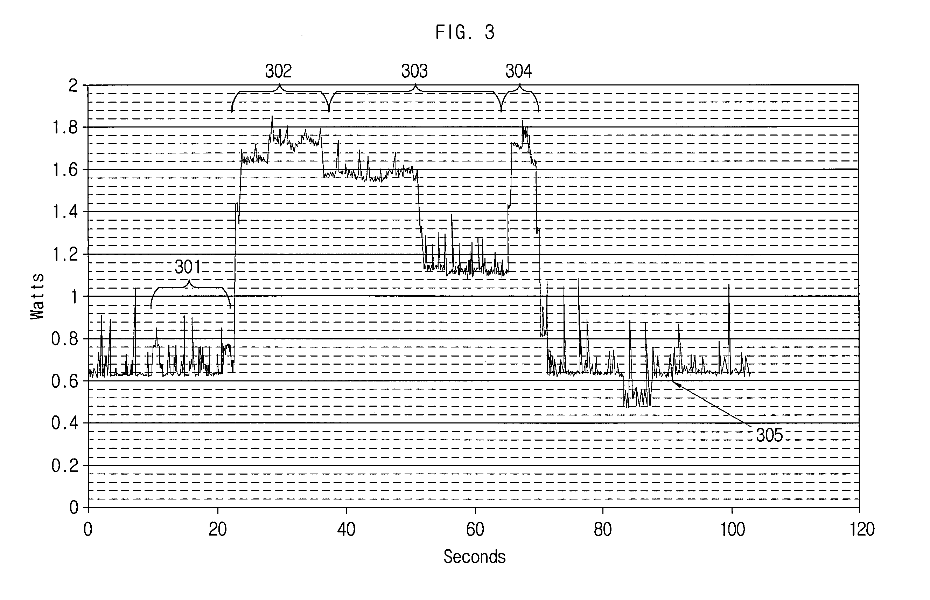

For example, it will be described with reference to the power consumption of mobile phone as shown in FIG. 3. FIG. 3 is a graph showing the power consumption of mobile phone.

The modes of mobile phone depend on the currently-working key or menu selection, and the power consumption also varies accordingly.

Range 301 indicates the situation of requesting a call by dialing, range 302 indicates the situation of waiting a receiver's response with hearing of ring-back tone, range 303 indicates the situation of talking over mobile phone, range 304 indicates the situation of ending a call, and range 305 indicates the situation of sending a call rate message. Since mobile phone operates different components in each of situations, the power consumption varies frequently as shown in FIG. 3.

Therefore controller 240 receives feedback on power demanded for the load such as mobile phone as shown in FIG. 3, and controls to generate hydrogen as much as being demanded so to provide power enough to the load coupled to the fuel cell.

The hydrogen generating apparatus may further comprise an input device for user to manually input the demanded amount of power or hydrogen.

The control unit 240 includes an adjustable resistor as its component, and controls the resistance of the adjustable resistor, thereby adjusting the amount of the electric current flowing between the first electrode 220 and the second electrode 230. For another example, the control unit 240 has an ON/OFF switch, which controls a timing of on/off operation, thereby adjusting the amount of the electric current between the first electrode 220 and the second electrode 230.

The hydrogen generating apparatus of the present invention can have a plurality of the first electrodes 220 and/or the second electrodes 230. In the case that a plural number of the first electrode 220 and/or the second electrode 230 are disposed, it can take a shorter time to generate the demanded amount of hydrogen since the hydrogen generating apparatus 200 can generate more hydrogen per unit time.

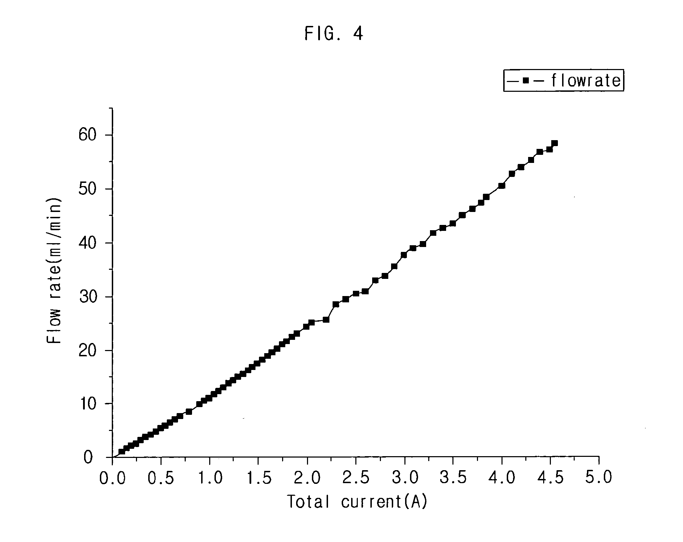

FIG. 4 is a graph showing how the amount of electric current flowing between the first electrode 220 and the second electrode 230 is related to the volume of hydrogen generated on the second electrode 230. Here, it should be noted that the volume of hydrogen is shown in flow-rate measured per minute, because not the total volume of generated hydrogen but the flow-rate of hydrogen is significant to a fuel cell.

An experiment for FIG. 3 was conducted under the following conditions:

First electrode 220: Magnesium (Mg)
Second electrode 230: Stainless steel
Distance between the electrodes: 3mm
Ingredients and concentration of electrolyte: 30wt% KCl
Number of the electrodes: Magnesium 3 each, Stainless steel 3 each
Electrode connecting method: Serial
Volume of aqueous electrolyte solution: 60cc (excessive condition)
Size of the electrode: 24 mm $\times$ 85 mm $\times$ 1 mm

FIG. 4 shows a greater flow rate of the hydrogen than a theoretical value based on MATHEMATICAL FORMULA 1, due to an interaction of the three pairs of electrodes.

Nevertheless, it is verified from FIG. 4 that the flow-rate of hydrogen is correlated with the amount of electric current between the first electrode 220 and the second electrode 230. Also, the graph shows an almost linear relation between the flow-rate and the amount of the electric current, which agrees with the MATHEMATICAL FORMULA 1.

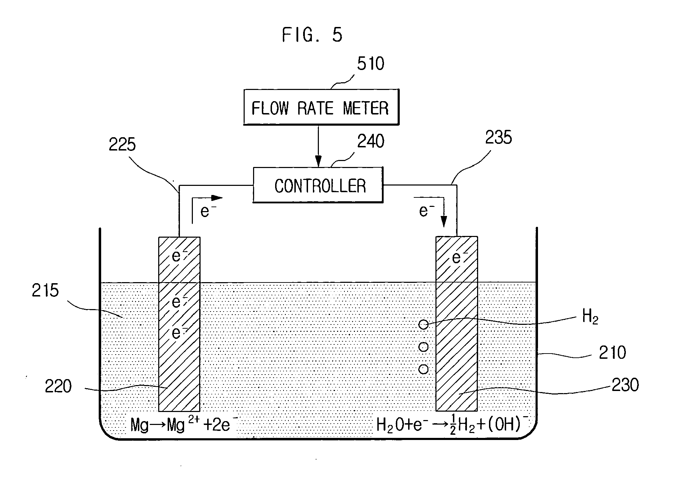

FIG. 5 is a block diagram of the control unit 240 of the hydrogen generating apparatus in accordance with an embodiment of the present invention.

The control unit 240 is connected to a flow rate meter 510.

The flow rate meter 510 measures the amount of hydrogen, in units of flow rate, generated from the second electrode 230 of the hydrogen generating apparatus. As described above, in order to use the hydrogen generating apparatus 200 in accordance with the present invention by coupling to a fuel cell, a certain amount of hydrogen generation, not a total quantity of hydrogen generation, should be maintained, and thus it is required that the amount of hydrogen generation be measured in units of ml/min. Of course, it is possible to use other measurement units as long as the unit is capable of measuring the flow rate.

The controller 240 is inputted with a set value, which is related to the amount of hydrogen generation. The hydrogen generating apparatus 200 is disposed with a separate input device (not shown), through which the set value can be inputted by the user. The required amount of output (i.e. electric power, voltage, current, impedance, and a combination thereof) or hydrogen generation may be inputted by a fuel cell that is coupled to the hydrogen generating apparatus 200. In the latter case, the fuel cell may be separately equipped with a hydrogen requiring unit for inputting the amount of output or hydrogen generation that is needed by the hydrogen generating apparatus 200.

The controller 240 compares the inputted set value with the amount of hydrogen generation measured by the flow rate meter 510. If the amount of generated hydrogen is smaller than the set value, the amount of electron flowing from the first electrode 220 to the second electrode 230 is controlled to increase the amount of hydrogen generation, and if the amount of generated hydrogen is greater than the set value, the amount of electron flowing from the first electrode 220 to the second electrode 230 is controlled to reduce the amount of hydrogen generation. Namely, the controller 240 controls the amount of hydrogen generation by controlling the amount of electron flowing from the first electrode 220 to the second electrode 230.

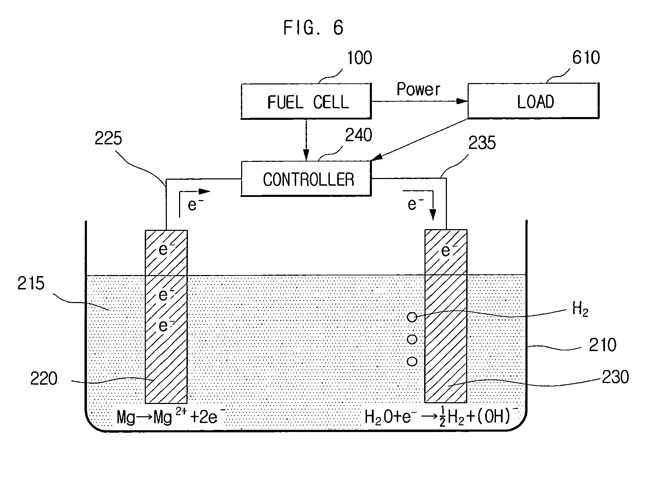

FIG. 6 is a fuel cell power generation system comprising controller 240 of hydrogen generating apparatus 200, fuel cell coupled thereto, and a load in accordance with another embodiment of the present invention.

The controller 240 is connected to a load 610 that is provided the electric power by the fuel cell 100. As described above, the load 610 demands different electric power according to the current working condition (with reference to FIG. 3). Thus the controller receives the demanded power according to the current working condition of the load 610.

And, the controller 240 is coupled to the fuel cell 100 to receive an output of the fuel cell 100. The output of fuel cell 100 is, for example, power being provided to the load 610 by the fuel cell 100 that receives hydrogen from the hydrogen generating apparatus 200. As described above, in order to use the hydrogen generating apparatus 200 in accordance with the present invention by coupling to a fuel cell, a certain amount of hydrogen generation, not a total quantity of hydrogen generation, should be maintained, and thus electric power of the fuel cell 100 based on the amount of hydrogen generation is received in units of watt (W). In addition controller 240 measures voltage of fuel cell 100 and converts into electric power by use of resistance. Of course, it is possible to use other measurement units as long as the unit is capable of measuring the electric power.

The controller 240 compares the output of fuel cell 100 with the demanded power of load 620. In case the output of fuel cell 100 is smaller than the demanded power, the controller 240 increases the amount of electron flowing from the first electrode 220 to the second electrode 230 to increase the amount of hydrogen generation, and in case the output of fuel cell 100 is greater than the demanded power, the controller 240 reduces the amount of electron flowing from the first electrode 220 to the second electrode 230 to reduce the amount of hydrogen generation. In case the output of fuel cell 100 is within a certain error range compared with the demanded power, current amount of hydrogen generation is maintained.

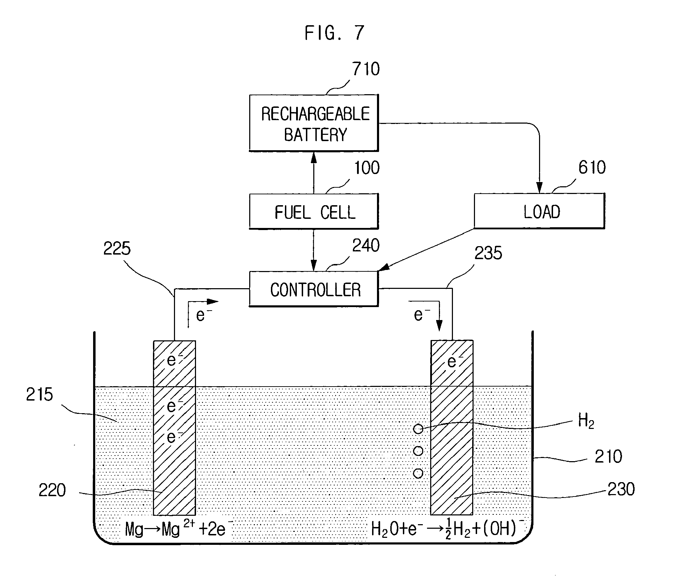

FIG. 7 is a fuel cell power generation system comprising controller 240 of hydrogen generating apparatus 200, fuel cell coupled thereto, and a load in accordance with still another embodiment of the present invention.

When compared with the fuel cell power generation system as shown in FIG. 6, the fuel cell power generation system in FIG. 7 further comprises a rechargeable battery 710. Since fuel cell has slow responsiveness, it is not possible to instantaneously respond to a peak power from the load 610. Thus it becomes possible to respond to peak power by charging the rechargeable battery 710 in advance.

The controller 240 measures voltage of rechargeable battery 710 to continuously generate hydrogen for the rechargeable battery 710 to be fully charged and for fuel cell 100 to keep providing voltage. And the controller 240 provides the charged voltage of rechargeable battery 710, and thus in case the voltage of rechargeable battery 710 drops, makes the hydrogen generating apparatus 200 to generate hydrogen.

Namely, the controller 240 compares present voltage of the rechargeable battery 710 with fully-charged voltage. The fully-charged voltage means the voltage at when the rechargeable battery 700 is fully charged. In case the present voltage is smaller than the fully-charged voltage, then the amount of electrons flowing from the first electrode 220 to the second electrode 230 is increased to increase the amount of hydrogen generation, and in case the present voltage is equal to or greater than the fully-charged voltage, then the amount of electrons flowing from the first electrode 220 to the second electrode 230 is minimized to stop hydrogen generation.

Here, the rechargeable battery 710 may be a super capacitor or a small rechargeable battery. Super capacitor has the enhanced electric capacity, and can charge and discharge the electric power if necessary.

The drawings and detailed description are only examples of the present invention, serve only for describing the present invention and by no means limit or restrict the spirit and scope of the present invention. Thus, any person of ordinary skill in the art shall understand that a large number of permutations and other equivalent embodiments are possible. The true scope of the present invention must be defined only by the ideas of the appended claims.

**Claims**

1.  A hydrogen generating apparatus comprising:

    an electrolyzer, filled with an aqueous electrolyte solution;
    a first electrode, accommodated in the electrolyzer, submerged in the aqueous electrolyte solution, and generating electrons;
    a second electrode, accommodated in the electrolyzer, submerged in the aqueous electrolyte solution, receiving the electrons to generate hydrogen; and
    a controller, located between the first electrode and the second electrode, and controlling an amount of electrons flowing from the first electrode to the second electrode for a period of time.

2.  The apparatus of claim 1, in which a metal forming the first electrode has a higher ionization tendency than a metal forming the second electrode.

3.  The apparatus of claim 1 further comprising a flow rate meter, measuring an amount of hydrogen generated from the second electrode,
    in which the controller receives a set value, compares the amount of hydrogen generation with the set value, and controls the amount of electrons.

4.  The apparatus of claim 3, in which the controller is inputted with the set value directly from a user through an input unit or a fuel cell being coupled to the hydrogen generating apparatus.

5.  The apparatus of claim 3, in which the controller compares the set value with the amount of hydrogen generation, increases the amount of electrons if the amount of hydrogen generation is smaller than the set value, reduces the amount of electrons if the amount of hydrogen generation is greater than the set value, and maintains the amount of electrons if the amount of hydrogen generation is equal to the set value.

6.  The apparatus of claim 3, in which the set value has an upper limit and a lower limit, and the controller compares the set value with the amount of hydrogen generation, increases the amount of electrons if the amount of hydrogen generation is smaller than the lower set value, reduces the amount of electrons if the amount of hydrogen generation is greater than the upper set value, and maintains the amount of electrons if the amount of hydrogen generation is within a range between the upper set value and the lower set value.

7.  A fuel cell power generation system comprising:

    a hydrogen generating apparatus, controlling an amount of hydrogen generation by controlling an amount of electrons flowing between electrodes for a period of time;
    a fuel cell, being supplied with hydrogen generated by the hydrogen generating apparatus and converting chemical energy of the hydrogen to electrical energy; and
    a load, being provided the electric energy and performing a predetermined operation.

8.  The system of claim 7, in which the hydrogen generating apparatus comprises:

    an electrolyzer, filled with an aqueous electrolyte solution;
    a first electrode, accommodated in the electrolyzer, submerged in the aqueous electrolyte solution, and generating electrons;

a second electrode, accommodated in the electrolyzer, submerged in the aqueous electrolyte solution, receiving the electrons to generate hydrogen; and

a controller, receiving a demanded power from the load, measuring an output of the fuel cell, comparing the demanded power with the output, and controlling the amount of electrons flowing from the first electrode to the second electrode for a period of time.

9.  The system of claim 8, in which a metal forming the first electrode has a higher ionization tendency than a metal forming the second electrode.

10. The system of claim 8, in which the controller compares the demanded power with the output, and reduces the amount of electrons if the output is greater than the demanded power, increases the amount of electrons if the output is smaller than the demanded power, and maintains the amount of electrons if output is equal to the demanded power.

11. The system of claim 7 further comprising
a rechargeable battery, being coupled between the fuel cell and the load, being charged by the electric energy from the fuel cell, and providing the charged electric energy when the load needs.

12. The system of claim 11, in which the hydrogen generating apparatus comprises:

an electrolyzer, filled with an aqueous electrolyte solution;
a first electrode, accommodated in the electrolyzer, submerged in the aqueous electrolyte solution, and generating electrons;
a second electrode, accommodated in the electrolyzer, submerged in the aqueous electrolyte solution, receiving the electrons to generate hydrogen; and
a controller, measuring a present voltage of the rechargeable battery, comparing a fully-charged voltage with the present voltage, and controlling the amount of electron flowing from the first electrode to the second electrode for a period of time.

13. The system of claim 12, in which a metal forming the first electrode has a higher ionization tendency than a metal forming the second electrode.

14. The system of claim 12, in which the controller compares the present voltage with the fully-charged voltage, and increases the amount of electrons if the present voltage is smaller than the fully-charged voltage, and minimizes the amount of electrons if the present voltage is equal to or greater than the fully-charged voltage.

FIG. 1

FIG. 2

$Mg \rightarrow Mg^{2+} + 2e^-$     $H_2O + e^- \rightarrow \frac{1}{2}H_2 + (OH)^-$

FIG. 3

FIG. 4

FIG. 5

510

FLOW RATE METER

225    240    235

CONTROLLER

e⁻        e⁻

215

220

210

230

H₂

$Mg \rightarrow Mg^{2+} + 2e^-$          $H_2O + e^- \rightarrow \frac{1}{2}H_2 + (OH)^-$

FIG. 6

$$Mg \rightarrow Mg^{2+} + 2e^-$$

$$H_2O + e^- \rightarrow \tfrac{1}{2}H_2 + (OH)^-$$

FIG. 7

$$Mg \rightarrow Mg^{2+} + 2e^-$$

$$H_2O + e^- \rightarrow \tfrac{1}{2}H_2 + (OH)^-$$

**European Patent Office**

**EUROPEAN SEARCH REPORT**

Application Number

EP 08 25 0411

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 436 793 A (ADLHART OTTO J [US]) 13 March 1984 (1984-03-13) * claims 1,2 * * column 1, lines 24-50 * * column 2, lines 11-29 * * column 3, lines 55-56 * ----- | 1-14 | INV. H01M8/06 |
| X | US 2003/091878 A1 (ROSENFELD OREN [IL] ET AL) 15 May 2003 (2003-05-15) * claims 1,25,26 * * paragraph [0153]; figure 10 * * paragraphs [0175] - [0176] * ----- | 1-10, 12-14 | |
| A | US 2004/072041 A1 (KOSCHANY ARTHUR [DE]) 15 April 2004 (2004-04-15) * paragraphs [0009], [0010] * * claims 1,6,17 * * paragraph [0017] * ----- | 1-14 | |

|  |  |
|---|---|
|  | TECHNICAL FIELDS SEARCHED (IPC) |
|  | H01M |

The present search report has been drawn up for all claims

| Place of search | Date of completion of the search | Examiner |
|---|---|---|
| The Hague | 16 June 2008 | Martins Lopes, Luis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 25 0411

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2008

| Patent document cited in search report | Publication date | Patent family member(s) | Publication date |
|---|---|---|---|
| US 4436793 A | 13-03-1984 | NONE | |
| US 2003091878 A1 | 15-05-2003 | EP 1318558 A2<br>US 2006210847 A1 | 11-06-2003<br>21-09-2006 |
| US 2004072041 A1 | 15-04-2004 | AU 2002229483 A1<br>CA 2439661 A1<br>WO 02054516 A2<br>DE 10065269 C1 | 16-07-2002<br>11-07-2002<br>11-07-2002<br>02-10-2002 |

EPO FORM P0459

For more details about this annex : see Official Journal of the European Patent Office, No. 12/82

**EP 1 959 516 A1**

**REFERENCES CITED IN THE DESCRIPTION**

**Patent documents cited in the description**

- KR 20070015552

- KR 20070085138